# EUROPÄISCHE PATENTSCHRIFT

(11) **EP 2 307 184 B1**
(45) Veröffentlichungstag und Bekanntmachung des Hinweises auf die Patenterteilung: **29.06.2016**
(21) Anmeldenummer: 09780296.1
(22) Anmeldetag: 08.07.2009
(51) Int. Cl.: B29C 49/64, B29C 35/16, B29C 49/42, B08B 9/34, C03B 25/06

(54) **ANLAGE ZUM HERSTELLEN VON BEHÄLTNISSEN MIT EINER VORRICHTUNG ZUM BEHANDELN EINER AUSSENWANDUNG DER BEHÄLTNISSE MIT EINER BEWEGLICHEN ZUFÜHREINRICHTUNG UND DAZUGEHÖRIGES VERFAHREN**
PLANT FOR PRODUCING OF CONTAINERS WITH A DEVICE FOR TREATING A OUTER WALL OF THE CONTAINERS WITH A MOVABLE FEEDING DEVICE AND ASSOCIATED METHOD
INSTALLATION POUR LA PRODUCTION DE CONTENEURS AVEC UN DISPOSITIF POUR TRAITER UNE PAROI EXTÉRIEURE DES CONTENEURS AVEC UN DISPOSITIF D'ALIMENTATION MOBILE ET PROCÉDÉ ASSOCIÉ

(30) Priorität: 08.07.2008 DE 102008032123
(43) Veröffentlichungstag der Anmeldung: 13.04.2011
(73) Patentinhaber: Krones AG, 93073 Neutraubling (DE)
(72) Erfinder: DÜNZINGER, Bernhard, 84069 Unterdeggenbach (DE)
(74) Vertreter: Bittner, Bernhard
(86) Internationale Anmeldenummer: PCT/EP2009/058648
(87) Internationale Veröffentlichungsnummer: WO 2010/003973

(56) Entgegenhaltungen:
- WO-A1-99/50039
- CA-A- 900 829
- DE-A1-102006 053 193
- DE-U1-202007 008 120
- SU-A1- 915 867
- US-A- 4 592 719

## Beschreibung

Die vorliegende Erfindung bezieht sich auf eine Vorrichtung zum Behandeln von Behältnissen und insbesondere von Kunststoffbehältnissen. In jüngerer Zeit haben sich im Bereich der getränkeherstellenden Industrie zunehmend Kunststoffflaschen als Behältnisse für Getränke durchgesetzt. Dabei werden Kunststoff-Vorformlinge mittels eines Blasprozesses zu Behältnissen expandiert. Um die Behältnisse expandieren zu können, werden dabei die Vorformlinge zunächst in einem Ofen erwärmt und anschließend in einer Blasstation mittels Druckluft expandiert. Dabei ist es wünschenswert, die Behältnisse unmittelbar nach dem Expansionsvorgang zu kühlen, um zu verhindern, dass sie sich wieder teilweise zusammenziehen, um auf diese Weise die Arbeitsleistung der Anlage erhöhen zu können.

Die vorliegende Erfindung wird unter Bezugnahme auf Kunststoffbehältnisse beschrieben, es wird jedoch darauf hingewiesen, dass die Vorrichtung auch auf andere Behältnisse wie beispielsweise Glasbehältnisse Anwendung finden kann. Auch wird die Vorrichtung im Hinblick auf eine Kühlung der Behältnisse beschrieben, wobei auch hier darauf hingewiesen wird, dass auch andere Einsatzzwecke der Vorrichtung, wie beispielsweise eine Reinigung und insbesondere eine Aussenreinigung oder eine Trocknung der Behältnisse denkbar ist. Daneben wäre es auch möglich, andere Körper und insbesondere andere Kunststoffkörper mit der erfindungsgemäßen Vorrichtung zu behandeln.

Aus der DE 20 2007 008 120 U1 ist eine Vorrichtung zum Herstellen und Kühlen von Kunststoffhohlkörpern, entsprechend den Oberbegriffen der Ansprüche 1 und 14, bekannt. Diese Vorrichtung weist dabei einen Transporteur auf, der die Flaschen nach dem Blasen mit einer Mündung nach oben zu einem Füller transportiert, wobei dieser Transporteur dazu ausgebildet ist, den Bodenbereich des Kunststoffhohlkörpers zu kühlen. Unterhalb des Bodens des Behälters ist ein stationäres Rohr vorgesehen, welches Bohrungen zur Fluidabgabe für ein Kühlfluid aufweist.

Die DE 10 2004 023 419 A1 beschreibt ein Verfahren und eine Vorrichtung zum Abkühlen von frisch geblasenen Kunststoffflaschen. Dabei durchlaufen die Kunststoffflaschen zur aktiven Kühlung einen Kühltunnel der die Flaschen zumindest bereichsweise kühlt. Bei den aus dem Stand der Technik bekannten Vorrichtungen kann eine zufriedenstellende Kühlung der Behältnisse erreicht werden. Gleichwohl wäre es wünschenswert, die Behältnisse mit geringem Kühlvolumen möglichst effizient zu kühlen.

Der vorliegenden Erfindung liegt daher die Aufgabe zugrunde, eine Vorrichtung und ein Verfahren zu schaffen, welches eine möglichst effiziente Kühlung der Behältnisse erlaubt. Insbesondere soll eine Kühlung mit einem möglichst geringen Volumen an Kühlmedium erreicht werden.

Dies wird erfindungsgemäß durch eine Anlage nach Anspruch 1 und ein Verfahren nach Anspruch 14 erreicht. Vorteilhafte Ausführungsformen und Weiterbildungen sind Gegenstand der Unteransprüche.

Unter einer Transporteinrichtung wird jegliche Einrichtung verstanden, welche die Behältnisse fördert bzw. transportiert. Bei der Zuführeinrichtung kann es sich insbesondere aber nicht ausschließlich um eine Düse handeln, welche das fließfähige Medium auf wenigstens ein Behältnis richtet. Durch die Beweglichkeit der Zuführeinrichtung entlang des Transportpfades ist dabei eine individuelle Zufuhr des Kühlmediums auf die Behältnisse möglich. Vorzugsweise handelt es sich dabei bei dem fließfähigen Medium um ein gasförmiges und/oder flüssiges Kühlmedium für die Behältnisse.

Vorzugsweise ist die Bewegung der Zuführeinrichtung an die Bewegung der Behältnisse gekoppelt. Dies bedeutet, dass beispielsweise mit einem bestimmten Behältnis entlang eines vorbestimmten Wegabschnittes eine Zuführeinrichtung mitgeführt wird und diese mitgeführte Zuführeinrichtung das Behältnis mit dem fließfähigen Medium d.h. mit dem Kühlmedium beaufschlägt. Auf diese Weise ist sichergestellt, dass das aus der Zuführeinrichtung gelangende Medium stets auf das Medium gelangt und damit kein Kühlmedium verschwendet wird. Bevorzugt ist die Zuführeinrichtung derart gestaltet, dass sie das fließfähige Medium auf einen Bodenbereich_des Behältnisses richtet.

Insbesondere richtet die Zuführeinrichtung das fließfähige Medium auf einen Anspritzpunkt des Behältnisses. Auf diese Weise ist eine gezielte Kühlung des Anspritzpunktes der geblasenen Behältnisse möglich. Um die Stationsleistung der gesamten Anlage zur Herstellung der Behältnisse zu erhöhen, ist es generell erforderlich bzw. vorteilhaft, den Anspritzpunkt zu kühlen. Während in den führenden internen Stand der Technik der Anmelderin die Behältnisse einfach von unten mit stehenden Düsen abgeblasen oder abgespritzt wurden, wird erfindungsgemäß vorgeschlagen, Behältnisbegleitende d.h. mitlaufende Zuführeinrichtungen bzw. Düsenstücke anzuordnen, über die der Anspritzpunkt gezielt mit dem fließfähigen Medium und insbesondere mit Luft, Wasser oder einem Luft-Wassergemisch gekühlt werden kann.

Die Zuführeinrichtungen bewegen sich dabei entlang des Transportpfades der Behältnisse. Es wäre jedoch auch denkbar, dass die Zuführeinrichtungen zusätzlich in einer weiteren Richtung beweglich sind, beispielsweise in einer Ebene des Transportpfads und senkrecht zu diesem. Auf diese Weise wäre es möglich, den zu kühlenden Bereich zu vergrößern. Auch wäre es möglich, dass die Zuführeinrichtungen während des Transports der Behältnisse in einer Längsrichtung beweglich sind, um die Größe des gekühlten Bereichs des Behältnisses zu variieren. Vorzugsweise richten die Zuführeinrichtungen das fließfähige Medium von unten her an die Behältnisse.

Bei einer weiteren vorteilhaften Ausführungsform ist die Zuführeinrichtung unterhalb der Behältnisse angeordnet. Vorzugsweise ist eine Zuführeinrichtung in Form einer Düse vorgesehen, welche unterhalb der Behältnisse angeordnet ist und so das Kühlmedium von unten an den Boden der Behältnisse spritzt.

Bei einer weiteren vorteilhaften Ausführungsform enthält die Zuführeinrichtung vorzugsweise ein gesteuertes Ventil, welches das Austreten des Kühlmediums beim Verlassen des Kühlbereichs des Behältnisses bzw. beim Stillstand der Anlage stoppt.

Bei einer weiteren vorteilhaften Ausführungsform weist die Transporteinrichtung wenigstens ein Greifelement auf, welche s während des Transports der Behältnisse einen Halsbereich der Behältnisse greift. Vorzugsweise weist die Vorrichtung eine Vielzahl von Greifelementen auf.

Bei einer weiteren vorteilhaften Ausführungsform ist auch eine Vielzahl von Zuführeinrichtungen vorgesehen, wobei besonders bevorzugt jeweils eine Zuführeinrichtung zumindest abschnittsweise unterhalb eines Greifelements angeordnet ist. Auf diese Weise können mehrere Behältnisse nebeneinander bzw. hintereinander transportiert und gleichzeitig an ihrem Anspritzpunkt gekühlt werden. Dabei ist, wie oben erwähnt, vorzugsweise die Bewegung der Zuführeinrichtung an die Bewegung der Greifelemente gekoppelt.

Bei einer weiteren vorteilhaften Ausführungsform ist die Zuführeinrichtung in einer Längsrichtung der Behältnisse verstellbar. Genauer gesagt ist der Abschnitt zwischen den Greifelementen und den Zuführeinrichtungen verstellbar. Auf diese Weise kann eine erfindungsgemäß Anlage auch für unterschiedliche Behältnisse und insbesondere unterschiedlich hohe Behältnisse eingesetzt werden.

Bei einer weiteren vorteilhaften Ausführungsform weist die Vorrichtung ein Reservoir für das fließfähige Medium auf und in diesem Reservoir ist eine Vielzahl von Zuführeinrichtungen angeordnet. Diese Zuführeinrichtungen bewegen sich dabei, wie oben erwähnt, vorzugsweise mit den Behältnissen mit.

Bei einer weiteren vorteilhaften Ausführungsform weist die Vorrichtung eine Abdeckplatte für das Reservoir auf, wobei diese Abdeckplatte gegenüber dem Reservoir bewegbar ist und an dieser Abdeckplatte bevorzugt eine Vielzahl von Zuführeinrichtungen angeordnet ist. Das Reservoir für das fließfähige Medium wird dabei bevorzugt in einer Richtung durch die Abdeckplatte begrenzt und abgedichtet.

Bei einer weiteren vorteilhaften Ausführungsform ist die Bewegung der Abdeckplatte mittels einer Mitnehmeinrichtung an die Bewegung der Behältnisse gekoppelt. Durch die Bewegung der Abdeckplatte wird damit auch die Bewegung der einzelnen Zuführeinrichtungen auf die Bewegung der Behältnisse synchronisiert.

Bei einer weiteren vorteilhaften Ausführungsform weist das Reservoir eine ringsegmentförmige Gestalt auf. Damit kann es sich beispielsweise bei dem Reservoir um einen ringsegmentförmigen Kanal handeln, wobei auch die Behältnisse entlang eines ringförmigen Pfades geführt werden und auf einem Teilstück dieses Pfads von den Zuführeinrichtungen gekühlt werden.

Vorzugsweise wird dieses Reservoir über eine Zuleitung mit dem fließfähigen Medium versorgt und gibt dieses im Wesentlichen gleichmäßig über die einzelnen Zuführeinrichtungen ab. Bei einer weiteren vorteilhaften Ausführungsform weist die Transporteinrichtung einen Transportstern bzw. ein Transportrad auf, an dem die einzelnen Greifelemente angeordnet sind.

Bei einer weiteren vorteilhaften Ausführungsform ist das fließfähige Medium ein gasförmiges Medium und insbesondere Luft. Es wäre jedoch auch möglich, zur Kühlung eine Wasserkühlung des Anspritzpunktes vorzusehen, welche die einzelnen Behältnisse mit Flüssigkeit benetzt. In diesem Fall ist vorzugsweise eine anschließende Trocknung vorgesehen. Auch dabei ist es möglich, eine Vielzahl verschiedener Trocknungsdüsen vorzusehen, die die Behältnisse trocknen. Es könnten jedoch auch Trocknungsdüsen vorgesehen sein, die mit den Behältnissen mitbewegt werden, um auf diese Weise eine Wasserverschleppung in eine nachgeschaltete Anlage, beispielsweise eine Etikettiermaschine, zu minimieren. Eine weitere Ausführungsform besteht darin, dass das Kühlmedium gleichzeitig als Desinfektions- bzw. Sterilisationsmedium wirkt.

Die vorliegende Erfindung ist weiterhin auf ein Verfahren zum Behandeln von Behältnissen gerichtet, wobei Kunststoff-Vorformlinge zu Behältnissen expandiert werden und anschließend die expandierten Behältnisse mittels einer Transporteinrichtung entlang eines vorgegebenen Transportpfades transportiert werden, wobei die Behältnisse während dieses Transports mittels wenigstens einer Zuführeinrichtung, welche ein fließfähiges Medium auf einen Bereich der Außenwandung richtet, gekühlt werden. Erfindungsgemäß bewegt sich die Zuführeinrichtung entlang des Transportpfads der Behältnisse und bevorzugt auch in der Transportrichtung der Behältnisse. Vorzugsweise ist die Bewegung der Zuführeinrichtung an die Bewegung der Behältnisse gekoppelt und besonders bevorzugt sind mehrere Zuführeinrichtungen vorgesehen, die sich entlang des Transportpfads bewegen.

Weitere Vorteile und Ausführungsformen ergeben sich aus den beigefügten Zeichnungen:

Darin zeigen:
- Fig. 1: Eine schematische Darstellung einer erfindungsgemäßen Vorrichtung;
- Fig. 2: eine Draufsicht auf die Vorrichtung aus Fig. 1;
- Fig. 3: eine detailliertere Draufsicht auf die Vorrichtung aus Fig. 1;
- Fig. 4: eine schematische Seitenansicht der in Fig. 3 gezeigten Vorrichtung;
- Fig. 5: eine erfindungsgemäße Vorrichtung in einer weiteren Ausführungsform; und
- Fig. 6: eine Draufsicht auf die in Fig. 5 gezeigte Vorrichtung.

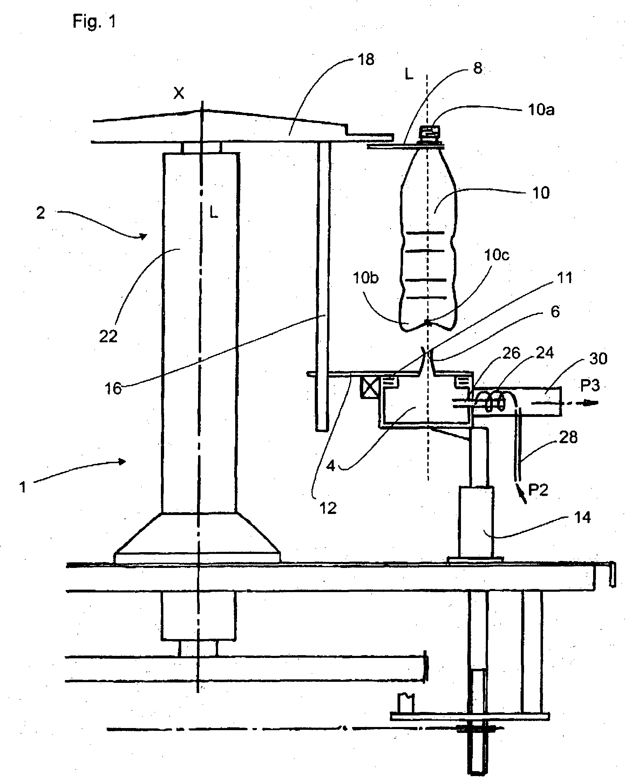

Fig. 1 zeigt eine schematische Ansicht einer erfindungsgemäßen Vorrichtung 1 zum Behandeln von Behältnissen 10 und insbesondere zum Kühlen dieser Behältnisse 10. Dabei werden Kunststoffbehältnisse 10 vorzugsweise unmittelbar nach einem Expansionsvorgang mittels einer Transporteinrichtung 2 transportiert. Hier handelt es sich bei dieser Transporteinrichtung um einen Transportstern 18, der mittels einer Welle 22 um eine Drehachse X drehbar gelagert ist und eine Vielzahl von Greifelementen wie Greifklammern 8 aufweist, wobei diese Greifklammern 8 vorzugsweise gesteuert sind. An diesen Greifklammern 8 werden die Behältnisse 10 hier entlang einer im Wesentlichen kreissegmentförmigen Bahn geführt. Dabei greift das Greifelement in einen unterhalb einer Mündung 10a des Behältnisses liegenden Halsbereich des Behältnisses 10 ein.

Unterhalb des Behältnisses 10 ist eine Vielzahl von Zuführeinrichtungen 6 für ein fließfähiges Medium angeordnet, welche zum Beaufschlagen eines Bodenbereichs 10b und insbesondere eines Anspritzpunkten 10c des Behältnisses dienen. Dabei ist diese Zuführeinrichtung 6, hier als Düse ausgeführt, hier zentrisch bezüglich der Längsrichtung L des Behältnisses 10 angeordnet. Es wäre jedoch auch möglich, schräg auf den Anspritzpunkt 10c zu blasen um auf diese Weise die Verwirbelungen des fließfähigen Mediums wie beispielsweise der Luft im Bereich des Anspritzpunktes zu verringern.

Wie erwähnt, wird mittels der Zuführeinrichtung 6 Luft auf den Anspritzpunkt 10c gebracht. Es wäre jedoch auch möglich, mit Hilfe der Düse bzw. Zuführeinrichtung 6 ein Wasser-LuftGemisch oder auch Wasser auf den Einspritzpunkt zu blasen um auf diese Weise die notwendige Kühlung zu erzeugen.

Unterhalb der Zuführeinrichtung 6 ist ein Reservoir 4 hier in Form eines Ringkanals vorgesehen, in das das fließfähige Medium wie beispielsweise die Luft eingeführt wird. Das Bezugszeichen 28 bezieht sich auf eine Zuführleitung für die Luft, die entlang des Pfeils P2 eingeführt und zunächst durch eine Verwirbelungseinrichtung 24 geführt wird, um über ein Einführrohr 26 in das Innere des Reservoirs 4 zu gelangen. Das Bezugszeichen 30 bezieht sich auf die Zuführeinheit in ihrer Gesamtheit in welcher auch entlang des Pfeils P3 warme Abluft abgeführt werden kann.

Genauer gesagt wird dem Reservoir 4 Druckluft zugeführt und die Verwirbelungseinrichtung 24, bzw. das Wirbelrohr 24 bewirkt, dass diese Druckluft in wärmere und kältere Anteile aufgespaltet wird und die kälteren Anteile dem Reservoir 4 zugeführt werden, wohingegen die wärmeren Anteile abgeführt werden.

Das Bezugszeichen 14 bezieht sich auf eine Höhenverstellungseinheit, mit der die Höhe des Reservoirs (und auch der Zuführeinrichtungen 6) in der Längsrichtung L verändert werden kann. Eine Abdeckplatte 12 deckt eine Oberseite des Reservoirs 4 ab und in dieser Abdeckplatte 12 sind auch die Zuführeinrichtungen 6 angeordnet. Dabei ist diese Abdeckplatte 12 mit Hilfe von Lagereinrichtungen und Dichtelementen 11, genauer gesagt Gleitscheiben 11 gegenüber dem Reservoir 4 bewegbar gelagert und abgedichtet. Diese Abdeckplatte 12 ist hier ringförmig ausgebildet und damit ebenfalls, wie der Transportstern, um die Drehachse X drehbar.

Das Bezugszeichen 16 bezieht sich auf ein Koppelelement bzw. einen Mitnahmebolzen, der die Drehbewegung der Abdeckplatte 12 an die Drehbewegung der Behältnisse 10 koppelt, so dass die Position der Zuführeinrichtung 6 gegenüber dem Behältnis 10 fest bleibt.

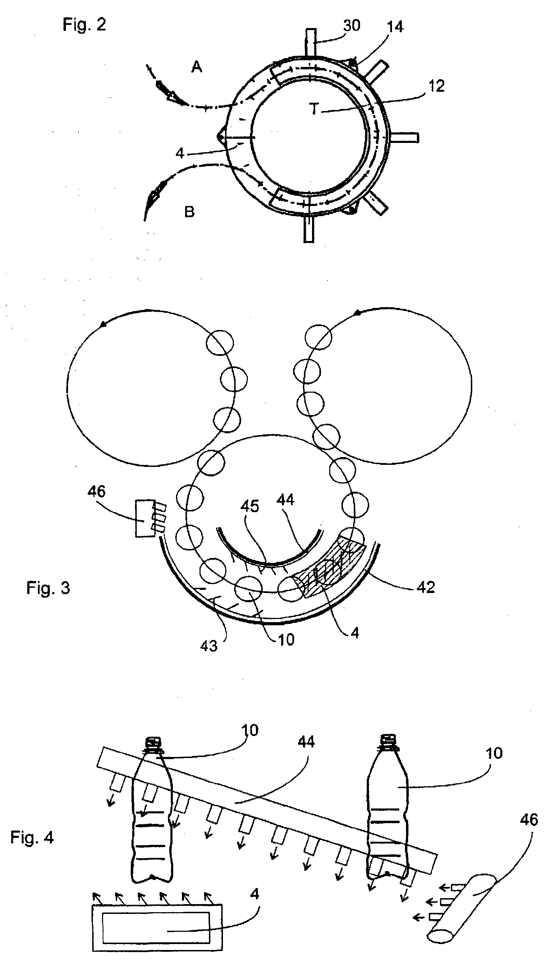

Fig. 2 zeigt eine Draufsicht auf die in Fig. 1 gezeigte Vorrichtung 1. Man erkennt hier wiederum, dass das Reservoir 4 ringförmig ausgebildet ist und hier drei Höhenverstelleinheiten 14 aufweist, um das gesamte Reservoir zu verschieben. Das Bezugszeichen T zeigt den Transportpfad der Behältnisse, die in Fig. 2 von dem Bereich A eingeführt werden, sich dann im Urzeigersinn entlang des Transportpfades T bewegen und nach unten wieder in einen Bereich B ausgeführt werden. In dem Bereich A kann beispielsweise eine (nicht gezeigte) Blasvorrichtung zum Expandieren von Vorformlingen zu den Behältnissen 10 angeordnet sein und in dem Bereich B beispielsweise eine Vorrichtung zum Etikettieren oder Befüllen der Behältnisse. An dem Reservoir 4 sind hier insgesamt fünf Zuleitungen vorgesehen, um das Reservoir 4 mit dem fließfähigen Medium zu befüllen.

Fig. 3 zeigt eine detaillierte Darstellung der in Fig. 2 gezeigten Vorrichtung. Dabei ist hier die Abdeckplatte 12 für die Bodenabblasung nur schematisch dargestellt. Weiterhin ist ein innerer Ring 44 mit einer Vielzahl von Düsen 45 sowie ein äußerer Ring 42 mit einer Vielzahl von Düsen 43 vorgesehen, welche die Außenwandung der Behältnisse 10 kühlen bzw. nach einer Wasserkühlung trocknen.

Das Bezugszeichen 46 bezieht sich auf eine Ablasseinheit für eine seitliche Bodenabblasung um auch diesen Bereich effizient zu kühlen bzw. nach einer Wasserkühlung das Restwasser zu entfernen.

Fig. 4 zeigt eine Seitenansicht der in Fig. 3 gezeigten Vorrichtung. Man erkennt hier, dass der innere Ring hier vom Halsbereich der Behältnisse 10 zum Bodenbereich langsam entlang des Transportpfades T abfallend angeordnet ist, damit die Kühlluft in der gesamten Längsrichtung L des Behältnisses auf die Außenwandung des Behältnisses 10 aufgebracht werden kann. Dabei ist die Strömungsrichtung des Kühlmediums hier auf die Außenwandung des Behältnisses gerichtet. Das Bezugszeichen 46 bezieht sich auch hier wieder auf die Blaseinrichtung zum Kühlen des Bodenbereiches des Behältnisses.

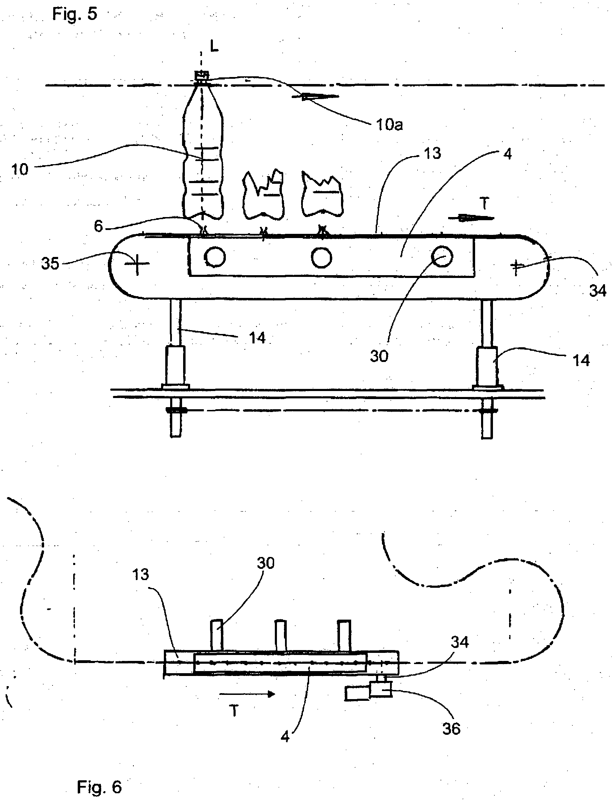

Fig. 5 zeigt eine weitere erfindungsgemäße Vorrichtung in einer anderen Ausführungsform. Bei dieser Ausführungsform ist die Abdeckplatte nicht in Form einer auf einer Kreisbahn beweglichen Abdeckplatte ausgeführt sondern in Form eines umlaufenden Bandes, an dem eine Vielzahl von Zuführeinrichtungen 6 (nur teilweise dargestellt) angeordnet ist. Auch hier ist ein Reservoir 4 vorgesehen, welches von dem Abdeckband 13 abgedeckt wird. Dieses Abdeckband 13 läuft um zwei Wellen 34, 35 um. Dabei ist vorzugsweise die Geschwindigkeit des Abdeckbandes 13 auf die Transportgeschwindigkeit der Behältnisse entlang des Transportpfades T angepasst. Mit der Höhenverstellungseinheit 14 kann hier die Höhe des gesamten Abdeck- bzw. Transportbandes mit dem Reservoir 4 in der Längsrichtung L der Behältnisse verschoben werden.

Bevorzugt verläuft dabei das Abdeckband in einer horizontalen Ebene, so dass der Abstand zwischen den Zuführeinrichtungen 6 und den Behältnissen entlang des Transportpfades konstant bleibt. Es wäre jedoch auch möglich, dass Abdeckband schräg zu stellen, um den Abstand zwischen den Zuführeinrichtungen und den Behältnissen 10 entlang des Transportpfades zu verändern.

Fig. 6 zeigt eine Draufsicht auf die in Fig. 5 gezeigte Vorrichtung. Man erkennt hier auch eine Antriebseinrichtung 36, welche das Abdeckband 13 umlaufend antreibt sowie drei Zuführeinheiten 30, um das Reservoir 4 mit dem Kühlmedium zu versorgen. Die in den Figuren 5 und 6 gezeigte Vorrichtung ist insbesondere für einen geradlinigen Transport der Behältnisse 10 geeignet. In der Transportrichtung vor dieser Einheit befindet sich üblicherweise eine Station zum Expandieren der Behältnisse und in der Station danach beispielsweise eine Etikettiereinrichtung.

## Patentansprüche

1. Anlage zum Herstellen von Behältnissen (10) mit einer Einrichtung zum Expandieren von Kunststoff-Vorformlingen zu Behältnissen (10) und mit einer Vorrichtung (1) zum Behandeln von Behältnissen (10) und insbesondere zum Kühlen von Behältnissen (10) mit einer Transporteinrichtung (2), welche die Behältnisse entlang eines vorgegebenen Transportpfades (T) führt, mit wenigstens einer Zuführeinrichtung (6) für ein fließfähiges Medium, welche dieses fließfähige Medium während des Transports der Behältnisse (10) auf eine Aussenwandung zum Kühlen der Behältnisse (10) richtet, wobei die Vorrichtung (1) in einer Transportrichtung der Behältnisse (10) nach der Einrichtung zum Expandieren angeordnet ist, **dadurch gekennzeichnet, dass** die Zuführeinrichtung (6) entlang des Transportpfades (T) beweglich ist.

2. Anlage nach Anspruch 1,
**dadurch gekennzeichnet, dass**
die Bewegung der Zuführeinrichtung (6) an die Bewegung der Behältnisse (10) gekoppelt ist.

3. Anlage nach wenigstens einem der vorangegangenen Ansprüche,
**dadurch gekennzeichnet, dass**
die Zuführeinrichtung (6) derart gestaltet ist, dass
sie das fließfähige Medium auf einen Bodenbereich (10b) des Behältnisses (10) richtet.

4. Anlage nach wenigstens einem der vorangegangenen Ansprüche,
**dadurch gekennzeichnet, dass**
die Zuführeinrichtung (6) unterhalb der Behältnisse (10) angeordnet ist.

5. Anlage nach wenigstens einem der vorangegangenen Ansprüche,
**dadurch gekennzeichnet, dass**
die Transporteinrichtung (2) wenigstens ein Greifelement (8) aufweist, welches während des Transports der Behältnisse (10) einen Halsbereich der Behältnisse greift.

6. Anlage nach Anspruch 5
**dadurch gekennzeichnet, dass**
die Vorrichtung (1) eine Vielzahl von Greifelementen (8) aufweist sowie eine Vielzahl von Zuführeinrichtungen (6) die jeweils unterhalb der Greifelemente (8) angeordnet sind.

7. Anlage nach wenigstens einem der vorangegangenen Ansprüche,
**dadurch gekennzeichnet, dass**
die Zuführeinrichtung (6) in einer Längsrichtung (L) der Behältnisse (10) verstellbar ist.

8. Anlage nach wenigstens einem der vorangegangenen Ansprüche,
**dadurch gekennzeichnet, dass**
die Vorrichtung (1) ein Reservoir (4) für das fließfähige Medium aufweist und an diesem Reservoir (4) eine Vielzahl von Zuführeinrichtungen (6) angeordnet ist.

9. Anlage nach Anspruch 8,
**dadurch gekennzeichnet, dass**
die Vorrichtung (1) eine Abdeckplatte (12) für das Reservoir (4) aufweist, wobei diese Abdeckplatte (12) gegenüber dem Reservoir (4) bewegbar ist und an dieser Abdeckplatte (12) eine Vielzahl von Zuführeinrichtungen (6) angeordnet ist.

10. Anlage nach Anspruch 9
**dadurch gekennzeichnet, dass**
eine Bewegung der Abdeckplatte (12) mittels einer Mitnehmereinrichtung (16) an die Bewegung der Behältnisse (10) gekoppelt ist.

11. Anlage nach wenigstens einem der vorangegangenen Ansprüche 8 - 10,
**dadurch gekennzeichnet, dass**
das Reservoir (4) eine ringförmige oder ringsegmentförmige Gestalt aufweist.

12. Anlage nach wenigstens einem der vorangegangenen Ansprüche,
**dadurch gekennzeichnet, dass**
die Transporteinrichtung (2) einen Transportstern (18) aufweist.

13. Anlage nach wenigstens einem der vorangegangenen Ansprüche,
**dadurch gekennzeichnet, dass**
das fließfähige Medium ein gasförmiges Medium und insbesondere Luft ist.

14. Verfahren zum Behandeln von Behältnissen (10), wobei Kunststoff - Vorformlinge zu Behältnissen (10) expandiert werden und anschließend die expandierten Behältnisse (10) mittels einer Transporteinrichtung (2) entlang eines vorgegebenen Transportpfads (T) transportiert werden, wobei die Behältnisse (10) während dieses Transports mittels wenigstens einer Zuführeinrichtung (6), welche ein fließfähiges Medium auf einen Bereich der Aussenwandung der Behältnisse (10) richtet, gekühlt werden, **dadurch gekennzeichnet, dass**
sich die Zuführeinrichtung (6) entlang des Transportpfads (T) bewegt.

## Claims

1. Plant for producing containers (10) with a device for the expansion of plastics material preforms to form containers (10) and with an apparatus (1) for the treatment of containers (10) and in particular for cooling the containers (10) with a transport device (2), which guides the containers along a pre-set transport path (T), with at least one supply device (6) for a flowable medium, which supply device directs said flowable medium during the transport of the containers (10) to an outer wall for cooling the containers (10), wherein the apparatus (1) is arranged in a transport direction of the containers (10) downstream of the expansion device, **characterized in that** the supply device (6) is movable along the transport path (T).

2. Plant according to claim 1, **characterized in that** the movement of the supply device (6) is coupled to the movement of the containers (10).

3. Plant according to at least one of the preceding claims, **characterized in that** the supply device (6) is designed in such a way that it directs the flowable medium onto a base region (10b) of the container (10).

4. Plant according to at least one of the preceding claims, **characterized in that** the supply device (6) is situated below the containers (10).

5. Plant according to at least one of the preceding claims, **characterized in that** the conveying device (2) has at least one gripping element (8) which grips a neck area of the containers (10) during the conveying of the containers (10).

6. Plant according to claim 5, **characterized in that** the apparatus (1) has a plurality of gripping elements (8) and a plurality of supply devices (6) which are arranged below the gripping elements (8) in each case.

7. Plant according to at least one of the preceding claims, **characterized in that** the supply device (6) is capable of being adjusted in a longitudinal direction (L) of the containers (10).

8. Plant according to at least one of the preceding claims, **characterized in that** the apparatus (1) has a reservoir (4) for the flowable medium, and a plurality of supply devices (6) are arranged on this reservoir (4).

9. Plant according to claim 8, **characterized in that** the apparatus (1) has a cover plate (12) for the reservoir (4), wherein this cover plate (12) is movable with respect to the reservoir (4) and a plurality of supply devices (6) are arranged on this cover plate (12).

10. Plant according to claim 9, **characterized in that** a movement of the cover plate (12) is coupled to the movement of the containers (10) by means of an entrainment device (16).

11. Plant according to at least one of the preceding claims 8 to 10, **characterized in that** the reservoir (4) is in the shape of a ring or an annular segment.

12. Plant according to at least one of the preceding claims, **characterized in that** the conveying device (2) has a star conveyor (18).

13. Plant according to at least one of the preceding claims, **characterized in that** the flowable medium is a gaseous medium and in particular air.

14. Method for treating containers (10), wherein plastics material preforms are expanded to form containers (10) and afterwards the expanded containers (10) are transported by means of a transport device (2) along a pre-set transport path, wherein the containers (10) are cooled during said transport by means of at least one supply device (6), which directs a flowable medium onto an area of the outer wall of the containers (10), **characterized in that** the supply device (6) moves along the transport path (T).

## Revendications

1. Installation pour la fabrication de récipients (10), avec un dispositif pour l'expansion de préformes en matière plastique afin de former des récipients (10) et avec un système (1) pour le traitement des récipients (10) et en particulier pour le refroidissement des récipients (10), avec un dispositif de transport (2) acheminant les récipients le long d'un chemin de transport (T) défini, avec au moins un dispositif d'amenée (6) pour un milieu fluide, lequel dirige pendant le transport des récipients (10) ledit milieu fluide vers une paroi extérieure pour le refroidissement des récipients (10), le système (1) étant disposé en aval du dispositif pour l'expansion dans la direction de transport des récipients (10),
**caractérisée en ce que**
le dispositif d'amenée (6) est déplaçable le long du chemin de transport (T).

2. Installation selon la revendication 1,
**caractérisée en ce que**
le déplacement du dispositif d'amenée (6) est couplé au déplacement des récipients (10).

3. Installation selon au moins une des revendications précédentes,
**caractérisée en ce que**
le dispositif d'amenée (6) est configuré de manière à diriger le milieu fluide vers une zone de fond (10b) du récipient (10).

4. Installation selon au moins une des revendications précédentes,
**caractérisée en ce que**
le dispositif d'amenée (6) est disposé en dessous des récipients (10).

5. Installation selon au moins une des revendications précédentes,
**caractérisée en ce que**
le dispositif de transport (2) comporte au moins un élément de préhension (8) qui saisit une zone de col des récipients pendant le transport des récipients (10).

6. Installation selon la revendication 5,
**caractérisée en ce que**
le système (1) comporte une pluralité d'éléments de préhension (8) et une pluralité de dispositifs d'amenée (6) respectivement disposés en dessous des éléments de préhension (8).

7. Installation selon au moins une des revendications précédentes,
**caractérisée en ce que**
le dispositif d'amenée (6) est réglable dans le sens de la longueur (L) des récipients (10).

8. Installation selon au moins une des revendications précédentes,
**caractérisée en ce que**
le système (1) comporte un réservoir (4) pour le milieu fluide et **en ce qu'**une pluralité de dispositifs d'amenée (6) est disposée sur ledit réservoir (4).

9. Installation selon la revendication 8,
**caractérisée en ce que**
le système (1) comporte une plaque de couverture (12) pour le réservoir (4), ladite plaque de couverture (12) étant mobile par rapport au réservoir (4), et **en ce qu'**une pluralité de dispositifs d'amenée (6) est disposée sur ladite plaque de couverture (12).

10. Installation selon la revendication 9,
**caractérisée en ce**
**qu'**un déplacement de la plaque de couverture (12) au moyen d'un dispositif d'entraîneur (16) est couplé au déplacement des récipients (10).

11. Installation selon au moins une des revendications précédentes 8 à 10,
**caractérisée en ce que**
le réservoir (4) présente une forme en anneau ou en segment d'anneau.

12. Installation selon au moins une des revendications précédentes,
**caractérisée en ce que**
le dispositif de transport (2) comporte une étoile de transport (18).

13. Installation selon au moins une des revendications précédentes,
**caractérisée en ce que**
le milieu fluide est un fluide gazeux et en particulier de l'air.

14. Procédé de traitement de récipients (10), des préformes en matière plastique étant expansées pour former des récipients (10) et les récipients (10) expansées étant ensuite convoyés au moyen d'un dispositif de transport (2) le long d'un chemin de transport (T) défini, les récipients (10) étant pendant ledit transport refroidis au moyen d'au moins un dispositif d'amenée (6) dirigeant un milieu fluide vers une zone de la paroi extérieure des récipients (10),
**caractérisé en ce que**
le dispositif d'amenée (6) se déplace le long du chemin de transport (T).
